(19) Europäisches Patentamt
European Patent Office
Office européen des brevets

(11) EP 0 693 411 A1

(12) DEMANDE DE BREVET EUROPEEN

(43) Date de publication:
**24.01.1996 Bulletin 1996/04**

(51) Int Cl.6: **B61L 27/04**, B61L 3/00, B60L 15/20

(21) Numéro de dépôt: **95401691.1**

(22) Date de dépôt: **17.07.1995**

(84) Etats contractants désignés:
**AT BE CH DE DK ES GB GR IE IT LI LU MC NL PT SE**

(30) Priorité: **21.07.1994 FR 9409059**

(71) Demandeur: **GEC ALSTHOM TRANSPORT SA**
**F-75016 Paris (FR)**

(72) Inventeurs:
- **Benoliel, Serge**
**F-75013 Paris (FR)**
- **Feray-Beaumont, Stephane**
**F-78730 St Arnoult en Yvelines (FR)**
- **Dehbonei, Babak**
**F-93800 Epinay sur Seine (FR)**

(74) Mandataire: **Fournier, Michel et al**
**F-75008 Paris (FR)**

# (54) Système de pilotage automatique et procédé d'élaboration d'une consigne de vitesse dans un tel système

(57) La présente invention porte sur un système de pilotage automatique comportant:

- des moyens d'enregistrement de plusieurs situations de référence précalculées (5-7) donnant le temps nécessaire pour atteindre un point but en fonction de la position d'un véhicule sur une voie et de limitations de vitesse (8) imposées par différents tronçons de voie, et
- au moins un système à inférence floue SIF.

La présente invention porte également sur un procédé d'élaboration d'une consigne de vitesse dans un système de pilotage automatique consistant à obtenir l'évaluation de la situation présente d'un véhicule par rapport à plusieurs situations de référence précalculées (5-7) donnant le temps nécessaire pour atteindre un point but en fonction de la position d'un véhicule sur une voie de manière à gérer le temps de parcours du véhicule.

FIG.1
Position, Vitesse, Accélération
1
Vcons.
2
4
γcons.
3
T

EP 0 693 411 A1

## Description

La présente invention concerne les systèmes et procédés permettant la gestion des temps de parcours entre un point de départ et un point d'arrivée, par exemple d'un véhicule ferroviaire, en général, et porte, plus particulièrement, sur un système de pilotage automatique et un procédé d'élaboration d'une consigne de vitesse dans un tel système.

Une première catégorie des systèmes de pilotage automatique, notamment de véhicules ferroviaires, de l'art antérieur sont des systèmes à asservissement de type linéaire.

Ces systèmes de pilotage automatique, de l'art antérieur, tiennent compte de contraintes et paramètres extérieurs tels le profil de voie, à savoir: les pointes et les rampes, la possibilité de mise sur l'erre du véhicule, le confort des passagers, à savoir: passage trop brutal entre traction et freinage, la protection des véhicules en amont, le respect d'une vitesse maximal sur chaque canton.

Ces systèmes de pilotage automatique, de l'art antérieur, ne tiennent pas compte de contraintes et paramètres extérieurs tels l'énergie consommée par le véhicule, le temps de parcours garantie.

Conformément à l'état de la technique, le pilotage automatique de métro est effectué de façon à respecter une marche type. Une marche type correspond à un profil de vitesse déterminé sur une interstation. La marche type est choisie par le système de régulation du réseau parmi un nombre fixé de possibilités lors de l'arrêt du train en station. Chaque marche type correspond à un temps de parcours donné, mais les perturbations de trafic peuvent entraîner des retard importants. Ce procédé de génération de consigne de vitesse ne permet pas de rattraper de tels retards. D'autre part, l'optimisation de l'énergie consommée est réalisée en se mettant sur l'erre à des positions pré définies le long de la voie.

L'article "DESIGN, REALISATION, AND IMPROVEMENT OF AN OPTOMUM FUZZY CONTROLLER FOR A RUNNING TRAIN", de N. GENG et I. MUTA, publié dans Japanese Journal of Fuzzy Theory and Systems, Volume 5, Number 1, 1993, pages 133 à 146, et l'article "TOTAL SYSTEM FOR RAPID TRANSIT AND TRENDS IN CONTROL ELECTRONICS FOR RAILWAY VEHICLES", de A. OAZAMA et M. NOMI, publié dans Hitachi Review, Vol. 35 (1986), N°. 6, pages 297 à 304, illustrent les systèmes de pilotage automatique pour train de l'art antérieur.

Aussi un but de l'invention est-il un système de pilotage automatique et un procédé d'élaboration d'une consigne de vitesse permettant de prendre en compte des paramètres extérieurs.

En d'autres termes, l'invention a pour but un système de pilotage automatique et un procédé d'élaboration d'une consigne de vitesse permettant de minimiser les écarts par rapport à un temps de parcours de consigne, de respecter le profil des vitesses maximales, de respecter les points à protéger, de respecter les ordres de ralentissement et d'arrêt, de s'adapter à des petites perturbations du trafic et de rattraper des retards faibles.

Conformément à l'invention, le système de pilotage automatique se caractérise par:

- des moyens d'enregistrement de plusieurs situations de référence précalculées donnant le temps nécessaire pour atteindre un point but en fonction de la position d'un véhicule sur une voie et de limitations de vitesse imposées par différents tronçons de voie, et
- au moins un système à inférence floue SIF.

Conformément à une autre caractéristique de l'invention, le système de pilotage automatique se caractérise par:

- des moyens de calcul d'une consigne de vitesse Vcons,
- des moyens d'élaboration d'une consigne d'accélération $\gamma$cons,
- des moyens de génération d'une commande de traction T, et
- des moyens de mise sur l'erre du véhicule.

Conformément à une autre caractéristique de l'invention, le système de pilotage automatique se caractérise par des moyens de description de la situation d'un véhicule au moyen d'une variable $\beta$, ladite variable $\beta$ caractérisant l'écart de la situation présente aux situations limites définies par:

- une première situation de référence précalculée correspondant au temps minimal de parcours et donc à une vitesse maximale possible sur le parcours, et
- une deuxième situation de référence précalculée correspondant au temps de parcours maximal et donc à une vitesse minimale sur le parcours.

L'invention a également pour objet un système de pilotage automatique satisfaisant à l'une des caractéristiques suivantes:

- la variable $\beta$ est donnée par l'expression:
  $$\beta = (Tmax\text{-}Trestant)/(Tmax\text{-}Tmin),$$
  où Tmax et Tmin représentent respectivement les temps de parcours restant correspondant au marches en temps maximal et en temps minimal et
  où Trestant est donné par l'expression:
  $$Trestant = Tconsigne - Tprésent,$$
- la vitesse de consigne à suivre est proche de la vitesse maximale, respectivement minimale, admissible, lorsque $\beta$ est proche de 1, respectivement de 0,
- une première situation de référence précalculée correspond au temps minimal de parcours et donc à une vitesse maximale possible sur le parcours,
- une deuxième situation de référence précalculée correspond au temps de parcours maximal et donc à une vitesse minimale sur le parcours,
- une troisième situation de référence précalculée correspond au temps moyen de parcours et donc à une vitesse maximale moyenne sur le parcours, et
- des limitations de vitesse imposées par différents tronçons de voie,
- les moyens d'enregistrement comportent au moins une autre situation de référence précalculée.

Conformément à une caractéristique de l'invention, le procédé d'élaboration d'une consigne de vitesse dans un système de pilotage automatique se caractérise par l'évaluation de la situation présente d'un véhicule par rapport à plusieurs situations de référence précalculées (5-7) donnant le temps nécessaire pour atteindre un point but en fonction de la position d'un véhicule sur une voie de manière à gérer le temps de parcours dudit véhicule.

Conformément à une autre caractéristique de l'invention, le procédé d'élaboration d'une consigne de vitesse dans un système de pilotage automatique se caractérise par:

- un enregistrement de plusieurs situations de référence précalculées donnant le temps nécessaire pour atteindre un point but en fonction de la position d'un véhicule sur une voie, et
- un calcul d'une consigne de vitesse Vcons.

Le procédé selon cette autre caractéristique de l'invention, est susceptible de comporter des étapes suplémentaires consistant à réaliser:

- une élaboration d'une consigne d'accélération $\gamma$cons,
- une génération d'une commande de traction T, et
- une mise sur l'erre du véhicule.

Conformément à une autre caractéristique de l'invention, le procédé d'élaboration d'une consigne de vitesse dans un système de pilotage automatique se caractérise par la description de la situation d'un véhicule au moyen d'une variable $\beta$, ladite variable $\beta$ caractérisant l'écart de la situation présente aux situations limites définies par:

- une première situation de référence précalculée correspondant au temps minimal de parcours et donc à une vitesse maximale possible sur le parcours, et
- une deuxième situation de référence précalculée correspondant au temps de parcours maximal et donc à une vitesse minimale sur le parcours.

L'invention a également pour objet un procédé d'élaboration d'une consigne de vitesse dans un système de pilotage automatique satisfaisant à l'une des caractéristiques suivantes:

- la variable $\beta$ est donnée par l'expression:

$$\beta = (Tmax-Trestant)/(Tmax-Tmin),$$

où Tmax et Tmin représentent respectivement les temps de parcours restant correspondant au marches en temps maximal et en temps minimal, et

où Trestant est donné par l'expression:

$$Trestant = Tconsigne - Tprésent,$$

- la vitesse de consigne à suivre est proche de la vitesse maximale, respectivement minimale, admissible, lorsque $\beta$ est proche de 1, respectivement de 0.

Un avantage du système de pilotage automatique et du procédé d'élaboration d'une consigne de vitesse de l'invention est de réduire la consommation d'énergie des véhicules.

Un autre avantage du système de pilotage automatique et du procédé d'élaboration d'une consigne de vitesse de l'invention est d'améliorer le confort des passagers.

Un autre avantage du système de pilotage automatique et du procédé d'élaboration d'une consigne de vitesse de l'invention est l'insensibilité aux changements de charge et de caractéristiques des véhicules.

Un autre avantage du système de pilotage automatique et du procédé d'élaboration d'une consigne de vitesse de l'invention est de respecter les temps de parcours imposés tout en favorisant la mise sur l'erre.

L'écart en temps est en générale inférieure à cinq secondes et le pourcentage de mise sur l'erre est supérieure à trente pour-cent.

Un autre avantage du système de pilotage automatique et du procédé d'élaboration d'une consigne de vitesse de l'invention est de minimiser le retard lorsque le retard accumulé suite à un arrêt n'est pas totalement compensable.

Un autre avantage du système de pilotage automatique et du procédé d'élaboration d'une consigne de vitesse de l'invention est que les réductions de vitesse se font sans oscillation.

D'autres buts, caractéristiques et avantages de l'invention apparaîtront à la lecture de la description du mode de réalisation préféré du système de pilotage automatique et du procédé d'élaboration d'une consigne de vitesse dans un tel système, description faite en liaison avec les dessins dans lesquels:

- la figure 1 représente l'architecture générale d'un mode de réalisation préféré du système de pilotage automatique conforme à l'invention,

- la figure 2 représente un schéma de principe d'un mode de réalisation préféré du système de calcul de la vitesse de consigne Vcons conforme à l'invention,

- la figure 3 représente trois courbes correspondant à trois situations de référence précalculées,

- la figure 4 illustre un ensemble flou de type triangle défini par l'abscisse de trois sommets d'un triangle,

- la figure 5 représente un schéma de principe d'un mode de réalisation préféré du système d'élaboration de la consigne d'accélération $\gamma$cons conforme à l'invention,

- la figure 6 représente un schéma de principe d'un mode de réalisation préféré du système de génération d'une commande de traction T conforme à l'invention, et

- la figure 7 représente un exemple d'architecture du troisième système à inférence floue SIF3.

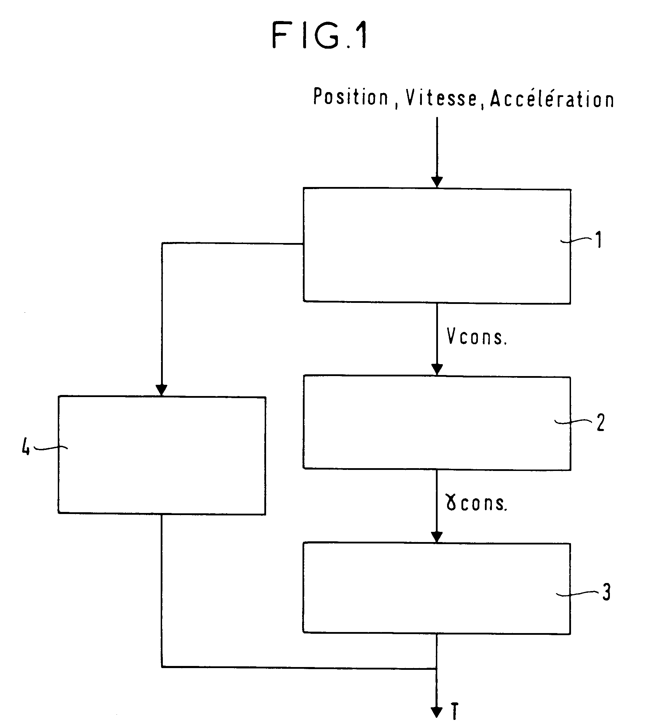

La figure 1 représente l'architecture générale d'un mode de réalisation préféré du système de pilotage automatique selon l'invention.

Il ressort de cette figure 1 trois grandes étapes pour l'obtention de la commande de traction du véhicule.

Une première étape 1 correspond au calcul d'une consigne de vitesse Vcons.

Ces calculs prennent en compte des données telles que la gestion du temps de parcours, le rattrapage des retards, l'optimisation de l'énergie et l'asservissement pour les réductions de vitesses.

Une deuxième étape 2 correspond à l'élaboration d'une consigne d'accélération $\gamma$cons.

Cette étape prend en compte les limitations d'accélération.

Une troisième étape 3 correspond à la génération d'une commande de traction T.

Cette étape prend en compte la robustesse aux variations de charge et aux mesures de vitesse.

L'architecture du système de pilotage automatique représentée à la figure 1 montre également une branche latérale 4 de mise sur l'erre du véhicule.

Un avantage du système de pilotage automatique et du procédé d'élaboration d'une consigne de vitesse dans un tel système est que le calcul d'une consigne de vitesse à chaque instant d'échantillonnage permet de prendre en compte les aléas d'exploitation et de réaliser un compromis minimisant le retard éventuel et la consommation d'énergie, par exemple par une mise sur l'erre du véhicule.

La position et la vitesse du véhicule, ainsi que les ordres de ralentissement sont des informations fournies au véhicule durant le parcours.

A l'inverse, la consigne sur le temps de parcours jusqu'à la prochaine station, le profil de la voie, les points à protéger, la marches de référence et les caractéristiques du train sont des informations soit fournies en station, soit transmise par les équipements au sol, soit en mémoire dans le système de pilotage automatique.

Conformément au système de pilotage automatique de l'invention, les trois étapes et la mise sur l'erre sont, de préférence, traitées par des systèmes dits à inférence floue associés à des systèmes à logique non floue.

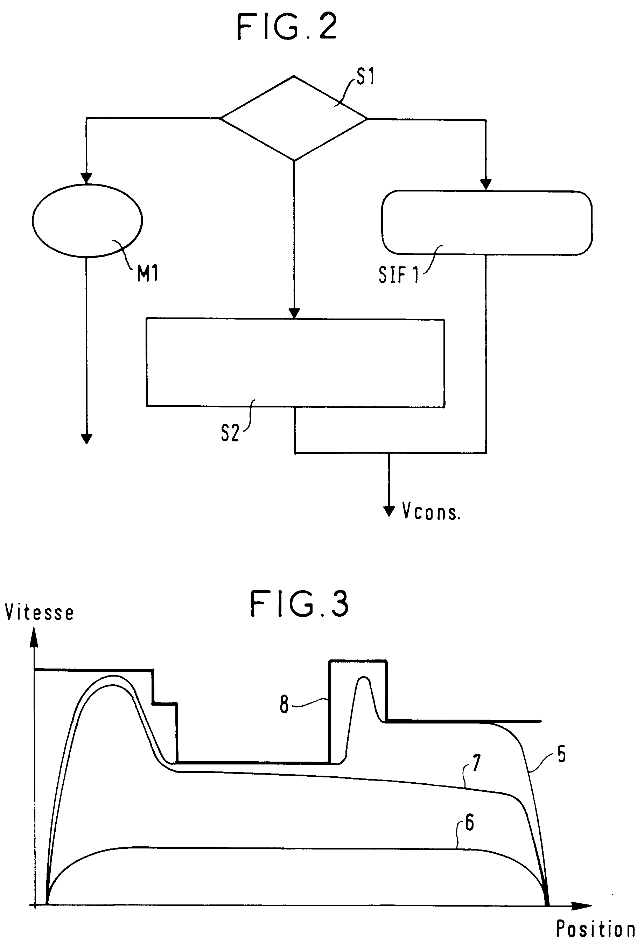

La figure 2 représente un schéma de principe d'un mode de réalisation préféré du système de calcul de la vitesse de consigne Vcons selon l'invention.

Un système d'analyse de la situation S1 oriente le calcul de la vitesse de consigne soit sur la mise sur l'erre du train, soit sur le calcul de la vitesse de consigne Vcons adéquate.

La mise sur l'erre du train se fait par des moyens connus non décrits M1.

Un premier système à inférence floue SIF1 estime le retard ou l'avance d'un véhicule en fonction du temps de parcours demandé, du temps courant et de trois profils de vitesse précalculés.

Les trois profils de vitesse précalculés sont soit chargés lors de l'arrêt du véhicule dans une station, soit en mémoire dans le système de pilotage automatique.

Ce premier système à inférence floue SIF1 produit la vitesse de consigne Vcons adéquate au moyen d'un système d'asservissement S2 lors des réductions de vitesse.

La vitesse de consigne est calculée de façon à éviter de prendre trop de retard ou trop d'avance, essayer de rattraper les retards éventuels, maximiser le temps de mise sur l'erre sur un trajet.

Les réductions de vitesse sont calculées de manière a ne interdire les collisions entre trains.

Le principe de la gestion du temps de parcours réside dans l'évaluation de la situation présente du véhicule vis-à-vis des trois situations de référence précalculées.

Pour un calcul donné, le système de pilotage automatique dispose de trois tableaux donnant le temps pour atteindre un point but en fonction de la position du véhicule sur une voie.

Ces trois tableaux correspondent aux trois situations de référence précalculées.

La figure 3 représente, à titre d'exemple, trois courbes 5 à 7 correspondant aux trois situations de référence précalculées desquelles se déduisent les trois tableaux.

Un premier tableau, associé à la première courbe 5, correspond au temps minimal de parcours et donc à une vitesse maximale possible sur le parcours.

Un deuxième tableau, associé à la deuxième courbe 6, correspond au temps de parcours maximal et donc à une vitesse minimale sur le parcours.

Un troisième tableau, associé à la troisième courbe 7, correspond au temps moyen de parcours et donc à une vitesse maximale moyenne sur le parcours.

Les vitesses possibles prennent en compte les limitations de vitesse imposées par les différents tronçons de la voie, ces limitations étant représentées par une quatrième courbe 8.

L'introduction d'une situation intermédiaire a comme avantage de mieux prendre en compte les particularités de la voie.

En effet, dans le cas d'un profil de vitesse maximale non constant, un profil moyen consistant à appliquer un facteur multiplicateur sur le profil maximal ne constitue pas forcément la solution idéale.

Conformément à l'invention, la situation du train est décrite par une variable $\beta$, caractérisant l'écart de la situation présente aux situations limites définies par les première 5 et deuxième 6 courbes.

Le temps restant Trestant est donné par l'expression:

$$\text{Trestant} = \text{Tconsigne} - \text{Tprésent},$$

et la variable $\beta$ est donnée par l'expression:

$$\beta = (\text{Tmax}-\text{Trestant})/(\text{Tmax}-\text{Tmin})$$

où Tmax et Tmin représentent respectivement les temps de parcours restant correspondant au marches en temps maximal et en temps minimal.

Il ressort de ce qui précède que si $\beta$ est proche de 1, respectivement de 0, la vitesse de consigne à suivre est proche de la vitesse maximale, respectivement minimale, admissible.

Si $\beta$ est supérieure à 1, le retard du véhicule n'est pas rattrapable.

Conformément à l'invention, la variable $\beta$ est filtrée par un système du premier ordre de gain unitaire et de constante de temps 1s, correspondant au retard de la chaîne de traction.

Le système du premier ordre est donné par l'expression suivante:

$$\beta \text{ considéré} = 0,8\ \beta\text{précédent} + 0,2\ \beta\text{courant}$$

Un avantage de ce filtrage est de ne pas engendrer de trop brusque variations de la consigne de vitesse.

Le compromis donnant la vitesse de consigne à appliquer est la traduction de l'appartenance progressive de la variable β aux différents sous-ensembles flous définis entre 0 et 1 et correspondant aux différents profils de référence.

Les systèmes à inférence floue utilisés de préférence dans le système de pilotage automatique de l'invention sont du type SUGENO.

La conclusion des règles est une combinaison linéaire des valeurs des entrées.

Un exemple de syntaxe des systèmes à inférence floue SIF utilisés dans le système de pilotage automatique de l'invention est représenté dans le tableau 1.

| /* Définition des variables */ | | | | | |
|---|---|---|---|---|---|
| variable entrée a<br>variable entrée b<br>variable commande c | 0<br>0<br>0 | 5;<br>1;<br>1 | | <br><br>sugeno; | |
| /* Définition des ensemble flous */ | | | | | |
| a petit triangle<br>a grand triangle<br>b petit triangle<br>b grand triangle | 0<br>0<br>0<br>0 | 0<br>5<br>0<br>1 | 5;<br>5;<br>1;<br>1; | | |
| /* Définition des règles floues */ | | | | | |
| règle r1 si a est petit et b est petit<br>règle r2 si a est grand et b est petit | | | | | alors c est 1 2 3;<br>alors c est 100; |
| Tableau 1 | | | | | |

La définition des variables donne la liste des variables d'entrée et de sortie du premier système à inférence floue SIF1 ainsi que leur domaine de variation respectif.

La définition des ensembles flous donne la liste des ensembles flous pour chaque variable, leur type et leurs paramètres caractéristiques.

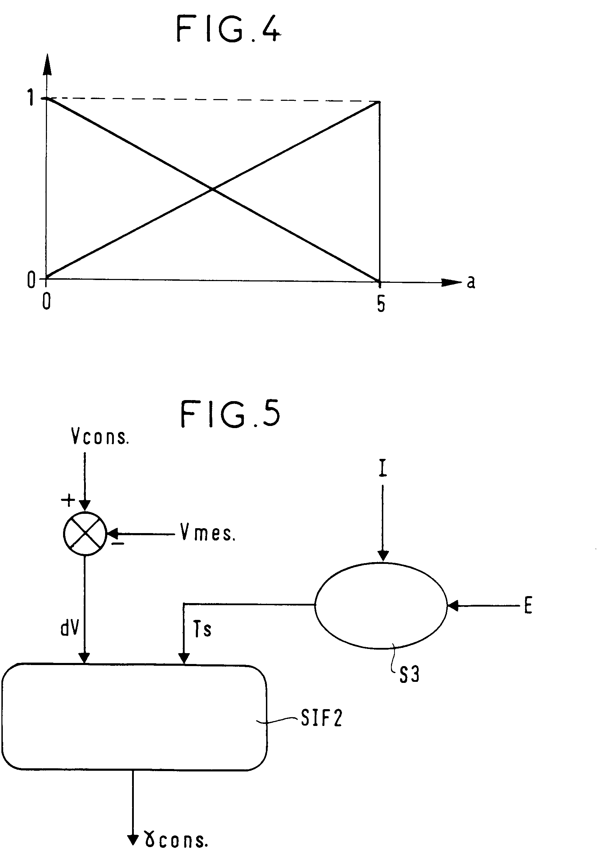

Par exemple, un ensemble flou de type triangle est défini par l'abscisse de trois sommets d'un triangle. Un tel triangle est représenté à la figure 4.

La définition des règles donne la liste des règles floues applicables.

L'interprétation de la règle r1 est la suivante:

Lorsque a et b satisfont les prémisses de la règle, alors $c = 1+2a+3b$.

Si la liste de sortie est réduite à une seule valeur, alors la conclusion de la règle prend directement cette valeur.

A titre d'exemple, le tableau 2 montre la syntaxe du premier système à inférence floue SIF1.

| /* Définition des variables */ | | | |
|---|---|---|---|
| variable entrée beta | 0 | 1; | |
| variable entrée vlent | 0 | 5.555; | /* ≈20 km/h */ |
| variable entrée vmoy | 0 | 13.5; | /* ≈50 km/h */ |
| variable entrée vrap | 0 | 26.5; | /* ≈95 km/h */ |
| variable commande v | 0 | 26.5 | sugeno; |
| /* Définition des ensembles flous */ | | | |
| beta petit triangle | 0 | 0 | 0.846208; |
| beta moyen triangle | 0 | 0.846208 | 1; |
| beta grand triangle | 0.846208 | 1 | 1; |
| /* Définition des règles floues */ | | | |
| règle r1 si beta est petit | | alors v est 0 0 1 0 0 ; | |
| règle r2 si beta est moyen | | alors v est 0 0 0 0 1 ; | |
| règle r3 si beta est grand | | alors v est 0 0 0 0 1 ; | |
| Tableau 2 | | | |

Le premier système à inférence floue SIF1 associé à la gestion du temps de parcours dépend de l'interstation.

Les ensembles flous associés à la variable β possède un paramètre variable calculé à partir des trois marches de référence, définie précédemment, et sont donc légèrement différents.

Pour chaque interstation, le sommet du sous-ensemble flou moyen pour β est obtenu par l'expression suivante:

$$\beta moyen = (Tmax-Tmoyen)/(Tmax-Tmin)$$

Les entrées du premier système à inférence floue SIF1 sont:

- le coefficient βcourant calculé par l'expression suivante:

$$Trestant = Tconsigne - Tprésent,$$
$$\beta = (Tmax-Trestant)/(Tmax-Tmin)$$

- les vitesses associée aux trois marches de référence.

La sortie du premier système à inférence floue SIF1 donne la consigne de vitesse et est une combinaison des trois vitesses de référence.

Il est possible d'ajouter des marches de référence intermédiaire, par ajout d'ensembles flous calculés automatiquement sur la variable β et des règles correspondant aux vitesses associées.

La figure 5 représente un schéma de principe d'un mode de réalisation préféré du système d'élaboration de la consigne d'accélération γcons selon l'invention.

Un second système à inférence floue SIF2 élabore une consigne d'accélération γcons en fonction, notamment, de l'écart entre la consigne de vitesse Vcons et la vitesse mesurée Vmes.

L'élaboration de la consigne d'accélération γcons est donc effectuée par un deuxième système à inférence floue SIF2, lequel a comme entrées l'écart entre la vitesse de consigne Vcons et la vitesse mesurée Vmes et un temps de sécurité Ts.

Le temps de sécurité Ts correspond à la marge de temps séparant l'instant présent d'un déclenchement de freinage d'urgence compte tenu de l'état du train, c'est à dire sa position, sa vitesse, son accélération, et des contraintes de vitesses et de décélération.

Le temps de sécurité Ts est obtenu au moyen d'un système de calcul S3 lequel prend en compte les contraintes de sécurité, à savoir: par exemple, les informations de voies I et l'état E du train, à savoir: sa position, sa vitesse et son accélération.

Le deuxième système à inférence floue SIF2 reproduit le raisonnement suivant:

Tant que le temps de sécurité est bon, c'est à dire qu'il n'y a pas de risque de déclenchement d'un freinage d'urgence, l'accélération dépend de l'écart de vitesse.

Si le temps de sécurité est mauvais, un freinage F1 est requis.

Si le temps de sécurité est très mauvais, un freinage F2 est requis.

Les freinage F1 et F2 dépendent des caractéristiques du train et correspondent, respectivement, à un freinage moyen et à un freinage maximum.

A titre d'exemple, le tableau 3 montre la syntaxe du deuxième système à inférence floue SIF2.

| /* Définition des variables */ | | | | | |
|---|---|---|---|---|---|
| variable entrée dv | -10 | 10; | | | |
| variable entrée ts | -10 | 20; | | | |
| variable commande ts | -1 | 1 | sugeno; | | |
| Définition des ensembles flous | | | | | |
| dv NG triangle | -10 | -10 | -5; | | |
| dv NP triangle | -10 | -6 | 0; | | |
| dv Z triangle | -6 | 0 | 6; | | |
| dv PP triangle | 0 | 6 | 10; | | |
| dv PG triangle | 6 | 10 | 10; | | |
| ts mauvais trapèze | -10 | -10 | 0 | 1; | |
| ts mauvais trapèze | 1 | 2 | 2 | 3; | |
| ts bon trapèze | 2 | 3 | 20 | 20; | |
| /* règles floues */ | | | | | |
| règle r1 si ts est bon et dv est PG | | | alors acc est 0.7; | | |
| règle r2 si ts est bon et dv est PP | | | alors acc est 0.3; | | |
| règle r3 si ts est bon et dv est Z | | | alors acc est 0; | | |
| règle r4 si ts est bon et dv est NP | | | alors acc est -0.4; | | |
| règle r5 si ts est bon et dv est NG | | | alors acc est -0.7; | | |
| règle r6 si ts est mauvais | | | alors acc est -0.7 | | |
| règle r7 si ts est mauvais | | | alors acc est -1; | | |
| Tableau 3 | | | | | |

Les entrées du système à inférence floue SIF2 sont:

- l'écart entre la vitesse de consigne Vcons et la vitesse mesurée Vmes, et
- le temps de sécurité Ts.

La sortie du système à inférence floue SIF2 est l'accélération de consigne.

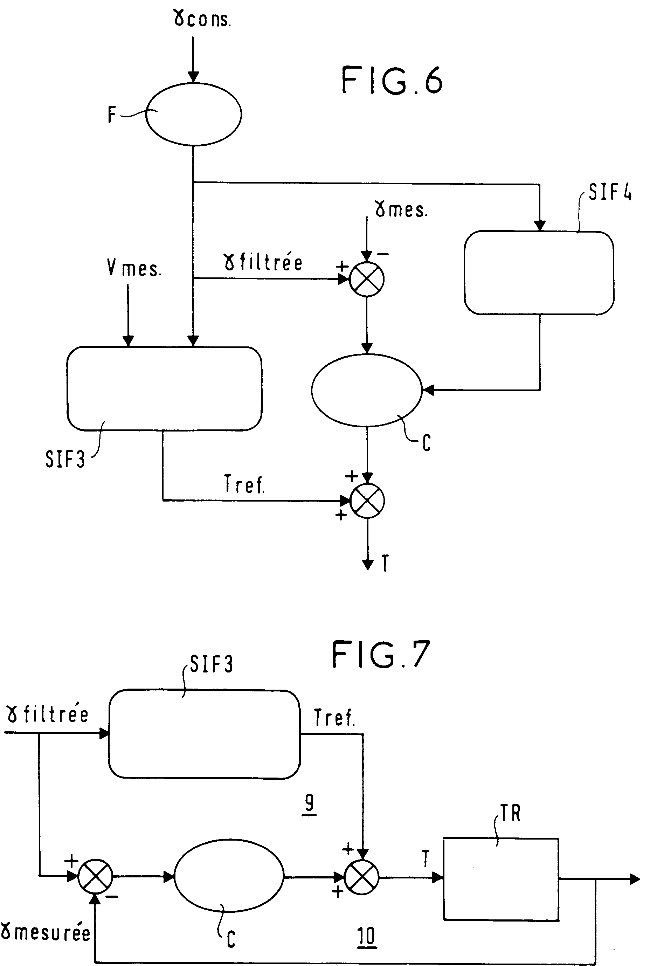

La figure 6 représente un schéma de principe d'un mode de réalisation préféré du système de génération d'une commande de traction T selon l'invention.

La consigne d'accélération $\gamma$cons produite est filtrée par un filtre F et sert à engendrer la commande de traction T au moyen d'un troisième système à inférence floue SIF3.

L'écart résiduel entre l'accélération de consigne filtrée $\gamma$filtrée et l'accélération mesurée $\gamma$mesurée est corrigé par un correcteur C du type PIR (Proportionnel Intégral Retard) ou un prédicteur de Smith dont les paramètres sont pilotés par un quatrième système à inférence floue SIF4.

L'équation décrivant le correcteur PIR est la suivante:

$$dtract(k)=A.dtract(k-1)+B.dtract(k-R)+C.\varepsilon(k)+D.\varepsilon(k-1)$$

où :

dtract(k) est la correction de commande de traction à appliquer,

dtract(k-1) est la correction de commande de traction appliquer au top d'échantillonnage précédent,

dtract(k-R) est la correction de commande de traction à appliquer il y a R tops d'échantillonnage, et

$\varepsilon$ est l'écart entre l'accélération de consigne et l'accélération mesurée.

A, B, C, D sont les paramètres du correcteur et dépendent de la dynamique du système et des performances désirées.

La valeur de R correspond à la valeur du retard en nombres de tops d'échantillonnage.

Les paramètres A et B correspondent à la vitesse de convergence du prédicteur.

A titre d'exemple, A, B et R ont pour valeur, respectivement, 0,25, 0,75 et 5.

Les coefficients C et D correspondent au gain du prédicteur.

La figure 7 représente un exemple d'architecture du troisième système à inférence floue SIF3.

Dans l'architecture retenue, le troisième système à inférence floue SIF3 fournit, à une boucle de commande 9 classique, une valeur de traction de référence Tréf.

La valeur de traction de référence Tréf est corrigée par une boucle de retour 10, laquelle boucle comporte le correcteur C.

La commande de traction T est fournit au train TR.

Ce mode de réalisation a comme avantage d'éviter les inconvénients de la boucle de retour simple en indiquant directement un point de commande autour duquel doit se trouver la commande à appliquer.

Il résulte de ce qui précède une plus grande rapidité et une suppression de la traînée.

Le correcteur C, utilisé dans la boucle de retour 10, a pour fonction de rattraper les erreurs autour d'une valeur de référence. La boucle de retour 10 doit tenir compte des constantes temporelles du système, à savoir: temps de réponse, retard. Le temps de réponse étant de 1,5 secondes et le retard de 1 seconde, il est de préférence utilisé un correcteur de type PIR (Proportionnel Intégral Retard) ou du type "prédicteur de Smith" de manière a synchroniser la commande au temps présent avec l'erreur prédite.

Un tel pilotage a comme avantage d'assurer des transitions graduelles entre les zones de fonctionnement nécessitant des réglages différents, par exemple pendant les phases d'accélération ou de freinage, et également l'ouverture progressive de la boucle lors des phases spéciales.

A titre d'exemple, le tableau 4 montre la syntaxe du troisième système à inférence floue SIF3.

```
/* Définition des variables */

variable entrée v              0      95;
variable entrée acc          - 2       2;

variable commande tract        0      98      sugeno;


/* Définition des ensembles flous */

v   Z      trapèze             0       0       0       30;
v   P      trapèze             0      30      31       55;
v   M      trapèze            32      58      61       94;
v   G      trapèze            60      91      95       95;

acc N      trapèze           - 2     - 2     - 0.1   - 0.07;
acc PN     triangle          - 0.1   - 0.05    0;
acc Z      triangle          - 0.05    0       0.3;
acc PM     triangle            0       0.3     0.6;
acc PG     triangle            0.3     0.6     0.9
acc PG     trapèze             0.6     0.9     2        2;


/* Définition des règles pour tract */

règle r0    si acc est N          alors tract est 69.5 0 43.5;

règle r1    si acc est PN et v est Z      alors tract est 66;
règle r2    si acc est PN et v est P      alors tract est 70;
règle r3    si acc est PN et v est M      alors tract est 82;
règle r4    si acc est PN et v est G      alors tract est 68;

règle r5    si acc est PN et v est Z      alors tract est 68;
règle r6    si acc est PN et v est P      alors tract est 76;
règle r7    si acc est PN et v est M      alors tract est 84;
règle r8    si acc est PN et v est G      alors tract est 91;

règle r9    si acc est PP et v est Z      alors tract est 70;
règle r10   si acc est PP et v est P      alors tract est 81;
règle r11   si acc est PP et v est M      alors tract est 88;
règle r12   si acc est PP et v est G      alors tract est 91;

règle r13   si acc est PM et v est Z      alors tract est 72;
règle r14   si acc est PM et v est P      alors tract est 82;
règle r15   si acc est PM et v est M      alors tract est 94;
règle r16   si acc est PM et v est G      alors tract est 98;

règle r17   si acc est PG et v est Z      alors tract est 85;
règle r18   si acc est PG et v est P      alors tract est 93;
règle r19   si acc est PG et v est M      alors tract est 98;
règle r20   si acc est PG et v est G      alors tract est 98;
```

**Tableau 4**

Les entrées du troisième système à inférence floue SIF3 sont:

- la vitesse mesurée Vmes et
- l'accélération de consigne désirée $\gamma$cons.

La sortie du troisième système à inférence floue SIF3 est la commande de traction T à appliquer.
A titre d'exemple, le tableau 5 montre la syntaxe du quatrième système à inférence floue SIF4.

| /* Définition des variables */ | | | | |
|---|---|---|---|---|
| variable entrée acc | O | 2; | | |
| variable entrée dacc | -2 | 0,1; | | |
| variable commande C | -20 | 20 | sugeno; | |
| variable commande D | -20 | 20 | sugeno; | |
| /* Définition des ensembles flous */ | | | | |
| acc Z trapèze | 0 | 0 | 0,1 | 0,4; |
| acc P trapèze | 0,1 | 0,4 | 2 | 2; |
| dacc Z trapèze | 0 | 0 | 0,04 | 0,08; |
| dacc P trapèze | 0,04 | 0,08 | 0,1 | 0,1; |
| /* Définition des règles floues */ | | | | |
| règle r1 si acc est Z et dacc est Z | | alors C est 10; | | |
| règle r2 si acc est Z et dacc est Z | | alors D est -2; | | |
| règle r3 si acc est P et dacc est Z | | alors C est 4; | | |
| règle r4 si acc est P et dacc est Z | | alors D est -3,2; | | |
| règle r5 si acc est Z et dacc est P | | alors C est 0; | | |
| règle r6 si acc est Z et dacc est P | | alors D est 0; | | |
| règle r7 si acc est P et dacc est P | | alors C est 0; | | |
| règle r8 si acc est P et dacc est P | | alors D est 0; | | |

Tableau 5

Les entrées du quatrième système à inférence floue SIF4 sont, plus précisément:

- la valeur absolue de l'accélération de consigne et
- la valeur absolue de l'accroissement d'accélération de consigne.

Les sorties du quatrième système à inférence floue SIF4 sont les paramètres C et D du prédicteur de Smith.

Il résulte de ce qui précède un procédé d'élaboration d'une consigne de vitesse dans un système de pilotage automatique conforme à l'invention.

Le procédé d'élaboration d'une consigne de vitesse dans un système de pilotage automatique consiste à obtenir l'évaluation de la situation présente d'un véhicule par rapport à plusieurs situations de référence précalculées (5-7) donnant le temps nécessaire pour atteindre un point but en fonction de la position d'un véhicule sur une voie de manière à gérer le temps de parcours du véhicule.

Toujours selon l'invention, le procédé d'élaboration d'une consigne de vitesse consiste à réaliser:

- un enregistrement de plusieurs situations de référence précalculées (5-7) donnant le temps nécessaire pour atteindre un point but en fonction de la position d'un véhicule sur une voie, et
- un calcul d'une consigne de vitesse Vcons,

Le procédé d'élaboration d'une consigne de vitesse de l'invention est susceptible de comporter des étapes suplémentaires consistant à réaliser:

- une élaboration d'une consigne d'accélération ycons,
- une génération d'une commande de traction T, et
- une mise sur l'erre du véhicule.

Le procédé d'élaboration d'une consigne de vitesse de l'invention donne la description de la situation d'un véhicule au moyen d'une variable β, ladite variable β caractérisant l'écart de la situation présente aux situations limites définies par:

- une première situation de référence précalculée (5) correspondant au temps minimal de parcours et donc à une vitesse maximale possible sur le parcours, et
- une deuxième situation de référence précalculée (6) correspondant au temps de parcours maximal et donc à une vitesse minimale sur le parcours.

## Revendications

1. Système de pilotage automatique, caractérisé en ce qu'il comprend:

   - des moyens d'enregistrement de plusieurs situations de référence précalculées (5-7) donnant le temps nécessaire pour atteindre un point but en fonction de la position d'un véhicule sur une voie et de limitations de vitesse (8) imposées par différents tronçons de voie, et
   - au moins un système à inférence floue SIF.

2. Système de pilotage automatique, caractérisé en ce qu'il comprend:

   - des moyens de calcul (1) d'une consigne de vitesse Vcons,
   - des moyens d'élaboration (2) d'une consigne d'accélération γcons,
   - des moyens de génération (3) d'une commande de traction T, et
   - des moyens de mise sur l'erre (4) du véhicule.

3. Système de pilotage automatique, caractérisé en ce qu'il comprend des moyens de description de la situation d'un véhicule au moyen d'une variable β, ladite variable β caractérisant l'écart de la situation présente aux situations limites définies par:

   - une première situation de référence précalculée (5) correspondant au temps minimal de parcours et donc à une vitesse maximale possible sur le parcours, et
   - une deuxième situation de référence précalculée (6) correspondant au temps de parcours maximal et donc à une vitesse minimale sur le parcours.

4. Système selon la revendication 3, dans lequel la variable β est donnée par l'expression:

   $$\beta = (Tmax-Trestant)/(Tmax-Tmin),$$

   où Tmax et Tmin représentent respectivement les temps de parcours restant correspondant au marches en temps maximal et en temps minimal et
   où Trestant est donné par l'expression:

   $$Trestant = Tconsigne - Tprésent.$$

5. Système selon la revendication 4, dans lequel la vitesse de consigne à suivre est proche de la vitesse maximale, respectivement minimale, admissible, lorsque β est proche de 1, respectivement de 0.

**6.** Système de pilotage automatique selon l'une quelconque des revendications 1 à 5, dans lequel:

- une première situation de référence précalculée (5) correspond au temps minimal de parcours et donc à une vitesse maximale possible sur le parcours,
- une deuxième situation de référence précalculée (6) correspond au temps de parcours maximal et donc à une vitesse minimale sur le parcours,
- une troisième situation de référence précalculée (7) correspond au temps moyen de parcours et donc à une vitesse maximale moyenne sur le parcours, et
- des limitations de vitesse (8) imposées par différents tronçons de voie.

**7.** Système de pilotage automatique selon l'une quelconque des revendications 1 à 6, dans lequel les moyens d'enregistrement comportent au moins une autre situation de référence précalculée.

**8.** Système de pilotage automatique selon l'une quelconque des revendications 1 à 7, dans lequel:

- les entrées du premier système à inférence floue SIF1 sont:
  . le coefficient βcourant calculé par l'expression suivante:
  $$\beta = (Tmax-Trestant)/(Tmax-Tmin),$$
  $$Trestant = Tconsigne - Tprésent,$$
  et

  . les vitesses associée aux situations de référence précalculées (5-7), et
- la sortie du premier système à inférence floue SIF1 donne la consigne de vitesse et est une combinaison desdites vitesses de référence.

**9.** Système de pilotage automatique selon l'une quelconque des revendications 1 à 7, dans lequel:

- les entrées du deuxième système à inférence floue SIF2 sont:
  . l'écart entre la vitesse de consigne Vcons et la vitesse mesurée Vmes, et
  . le temps de sécurité Ts, et
- la sortie du deuxième système à inférence floue SIF2 est l'accélération de consigne γcons.

**10.** Système de pilotage automatique selon l'une quelconque des revendications 1 à 7, dans lequel:

- les entrées du troisième système à inférence floue SIF3 sont:
  . la vitesse mesurée Vmes, et
  . l'accélération de consigne désirée γcons, et
- la sortie du troisième système à inférence floue SIF3 est la commande de traction T à appliquer.

**11.** Système de pilotage automatique selon l'une quelconque des revendications 1 à 7, dans lequel:

- les entrées du quatrième système à inférence floue SIF4 sont:
  . la valeur absolue de l'accélération de consigne, et

  . la valeur absolue de l'accroissement d'accélération de consigne, et

- les sorties du quatrième système à inférence floue SIF4 sont les paramètres d'un dispositif C piloté par ledit quatrième système à inférence floue SIF4.

**12.** Procédé d'élaboration d'une consigne de vitesse dans un système de pilotage automatique selon l'une quelconque des revendications 1 à 11, caractérisé par l'évaluation de la situation présente d'un véhicule par rapport à plusieurs situations de référence précalculées (5-7) donnant le temps nécessaire pour atteindre un point but en fonction de la position d'un véhicule sur une voie de manière à gérer le temps de parcours dudit véhicule.

**13.** Procédé d'élaboration d'une consigne de vitesse dans un système de pilotage automatique selon l'une quelconque des revendications 1 à 11, caractérisé par:

- un enregistrement de plusieurs situations de référence précalculées (5-7) donnant le temps nécessaire pour atteindre un point but en fonction de la position d'un véhicule sur une voie, et

- un calcul d'une consigne de vitesse Vcons.

**14.** Procédé selon la revendication 13, comportant des étapes suplémentaires consistant à réaliser:

- une élaboration d'une consigne d'accélération $\gamma$cons,

- une génération d'une commande de traction T, et

- une mise sur l'erre du véhicule.

**15.** Procédé d'élaboration d'une consigne de vitesse dans un système de pilotage automatique selon l'une quelconque des revendications 1 à 11, caractérisé par la description de la situation d'un véhicule au moyen d'une variable $\beta$, ladite variable $\beta$ caractérisant l'écart de la situation présente aux situations limites définies par:

- une première situation de référence précalculée (5) correspondant au temps minimal de parcours et donc à une vitesse maximale possible sur le parcours, et

- une deuxième situation de référence précalculée (6) correspondant au temps de parcours maximal et donc à une vitesse minimale sur le parcours.

**16.** Procédé selon la revendication 15, dans lequel la variable $\beta$ est donnée par l'expression:

$$\beta = (Tmax-Trestant)/(Tmax-Tmin),$$

où Tmax et Tmin représentent respectivement les temps de parcours restant correspondant au marches en temps maximal et en temps minimal, et
où Trestant est donné par l'expression:

$$Trestant = Tconsigne - Tprésent.$$

**17.** Procédé selon la revendication 16, dans lequel la vitesse de consigne à suivre est proche de la vitesse maximale, respectivement minimale, admissible, lorsque $\beta$ est proche de 1, respectivement de 0.

FIG.1

Position, Vitesse, Accélération
1
Vcons.
2
γcons.
3
4
T

FIG. 2
S1
M1
SIF 1
S2
Vcons.

FIG. 3
Vitesse
8
5
7
6
Position

FIG.4

1
0
0
5
a

FIG.5

Vcons.
+
Vmes.
–
I
E
dV
Ts
S3
SIF2
γcons.

γcons.
FIG.6
F
SIF4
γmes.
γfiltrée
Vmes.
+
−
C
SIF3
Tref.
+
+
T

FIG.7
SIF3
γfiltrée
Tref.
9
TR
+
+
T
−
+
γmesurée
C
10

Office européen des brevets

# RAPPORT DE RECHERCHE EUROPEENNE

Numero de la demande
EP 95 40 1691

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PROCEEDINGS OF THE INTERNATIONAL WORKSHOP ON ARTIFICIAL INTELLIGENCE FOR INDUSTRIAL APPLICATIONS, 25 Mai 1988, HITACHI CITY, JAPAN<br>pages 485 - 489<br>OSHIMA ET AL. 'OPERATION SYSTEM BASED ON PREDICTIVE FUZZY CONTROL'<br>* le document entier *<br>--- | 1-3,6,7, 12-15 | B61L27/04<br>B61L3/00<br>B60L15/20 |
| X | PROCEEDINGS OF THE IEEE TENCON '93, 19 Octobre 1993, BEIJING, CHINA<br>pages 338 - 342<br>JIA ET AL. 'AUTOMATIC TRAIN CONTROL - AN INTELLIGENT APPROACH'<br>* Le document entier *<br>--- | 1,2,12 | |
| X | PATENT ABSTRACTS OF JAPAN<br>vol. 17, no. 472 (M-1470) 27 Août 1993<br>& JP-A-05 112 243 (TOSHIBA CORP) 7 Mai 1993<br>* abrégé *<br>--- | 1,12 | |
| | | | **DOMAINES TECHNIQUES RECHERCHES (Int.Cl.6)** |
| X | PATENT ABSTRACTS OF JAPAN<br>vol. 18, no. 352 (M-1631) 4 Juillet 1994<br>& JP-A-06 090 508 (TOSHIBA CORP) 29 Mars 1994<br>* abrégé *<br>--- | 1,12 | B61L<br>B60L |
| A | PATENT ABSTRACTS OF JAPAN<br>vol. 17, no. 520 (M-1482) 20 Septembre 1993<br>& JP-A-05 137 216 (TOSHIBA CORP) 1 Juin 1993<br>* abrégé *<br>---<br>-/-- | 1,12 | |

Le présent rapport a été établi pour toutes les revendications

| Lieu de la recherche | Date d'achèvement de la recherche | Examinateur |
|---|---|---|
| BERLIN | 12 Octobre 1995 | BEITNER M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numero de la demande
EP 95 40 1691

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 539 885 (KABUSHIKI KAISHA TOSHIBA) * abrégé; colonne 2, ligne 11 - colonne 3, ligne 24; colonne 4, ligne 22 - colonne 8, ligne 53; figures 1-4 * --- | 1,12 | |
| A | ELEKTRISCHE BAHNEN, vol.87, no.5, Mai 1989, MUNCHEN DE pages 141 - 148 W. BIELLA 'Rechnergesteuerte Fahrkennlinienvorgaben für energieoptimale Zugfahrten bei Gleichstrombahnen' * abrégé; paragraphes "1 Einleitung", "5 Die rechnergesteuerte adaptive Fahrkennlinienvorgabe" et "6 Zusammenfassung"; figures 9-13 * --- | 1,2,12, 13 | |
| A | EP-A-0 257 662 (HITACHI LTD.) * abrégé; colonne 2, ligne 6 - colonne 4, ligne 21; colonne 4, ligne 49 - colonne 7, ligne 11; figures 1-3 * ----- | 1,12 | |
| | | | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| BERLIN | 12 Octobre 1995 | BEITNER M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)